# EUROPEAN PATENT APPLICATION

(11) **EP 4 674 762 A1**
(43) Date of publication of application: **07.01.2026**
(21) Application number: 24185736.6
(22) Date of filing: 01.07.2024
(51) Int. Cl.: B64D 37/06, B64D 37/32

(54) **FUEL TANK AND VEHICLE COMPRISING A FUEL TANK**

(71) Applicant: AIRBUS Operations GmbH, 21129 Hamburg (DE)
(72) Inventor: Wesseloh, Marc, Hamburg (DE)

(57) **Abstract**

In order to provide a fuel tank (5) that can be easily manufactured, a fuel tank (5) is provided that comprises a tank wall (10) enclosing a tank volume (11), and a tank liner (13). The tank wall (11) comprises a tank wall structure (12) located in the tank volume (11). The tank liner (13) is detachably attached to the tank wall structure (12) by at least one removable clamp (20).

## Description

The invention relates to a fuel tank, in particular a fuel tank for a vehicle such as an aircraft.

A fuel tank for a vehicle such as an aircraft includes a tank wall that encloses a tank volume. The fuel tank may also include a tank wall liner which lines the inside of the tank wall. EP 4 234 410 A1 describes a tank liner comprising a liner body made of liner material. The liner body comprises a mounting surface configured to be installed facing the tank wall and at least one sealing surface that is configured to be installed facing another tank wall. The liner material includes a cured sealant that is suitable for jet fuel. The liner material may include at least one reinforcement layer made of a textile or fibre material. This tank liner allows for enhanced protection against fuel leakages.

It is, desirable, to provide a fuel tank that is simple to manufacture.

According to the invention, a fuel tank is provided which comprises a tank wall enclosing a tank volume and a tank liner. The tank wall further comprises a tank wall structure located in the tank volume. The tank liner is detachably attached to the tank wall structure by at least one removable clamp.

The tank wall has an inner surface that encloses the tank volume. The tank wall structure is located in the inside of the fuel tank within the tank volume, for example on the inner surface of the tank wall. The clamp is used to detachably attach the tank liner to this tank wall structure and consequently to the inner surface of the fuel tank so as to line the fuel tank with the tank liner. The clamp or clamps remain in position within the tank volume during use of the fuel tank, i.e. when the tank volume comprises fuel, and come into contact with the fuel. This fuel is liquid fuel such as kerosene for aircraft or diesel for road or rail.

The liner is easily attached to the tank wall by placing the tank liner onto the tank wall structure, placing the clamp over the tank liner and fastening the clamp onto the tank liner and tank wall structure so as to secure the tank liner to the tank wall structure. The tank liner may have the form of a foil and may have two or more sublayers, e.g. a multilayer liner may be used. For example, the tank liner may comprise a cured sealant that is suitable for jet fuel and at least one reinforcement layer made of a textile or fibre material. The tank liner is used to provide enhanced protection against fuel leakages. The clamp is removable from the liner and tank wall structure so that the tank liner can be removed from the fuel tank by removing the clamp or clamps. The fuel tank is also easily fabricated due to the use of removable clamps to attach the tank liner to the inner surface of the fuel tank.

The clamp provides a fastening device which is used to hold or secure the tank liner and the tank wall structure tightly together to prevent their relative movement or separation. The clamp achieves this action through the application of inward pressure, e.g. by a pressing action. The clamp provides a temporary fastening as it is removable.

The clamp or clamps may be different forms. If more than one clamp is used in the fuel tank, the clamps may all have the same form or may have different forms, e.g. depending on the form of the tank wall structure onto which the clamp is to fasten the tank liner.

In an embodiment, the clamp comprises a first arm having a first clamping flange, and a second arm having a second clamping flange. The first arm and the second arm may also be called a jaw. The first arm is coupled to the second arm by a coupling member and the first clamping flange and the second clamping flange face one another. The first and second clamping flange are closed onto the tank wall structure by a screw connection to detachably attach the tank liner to the tank wall structure. The coupling member is located at the opposing end of the first and second arm from the first and second clamping flange, respectively. The first and second clamping flange are located at the distal end of the first and second arm, respectively.

In an embodiment, the clamp is a C-clamp, which is also known as a G-clamp. The second clamping flange may be attached to the distal end of the screw providing the screw connection. In this embodiment, the screw provides the distal portion of the second arm. The first clamping flange be located on the distal end of the first arm and the coupling member may be integral with the opposing proximal ends of the first and second arm.

In an alternative embodiment, the clamp comprises a first arm having a first clamping flange, and a second arm having a second clamping flange, wherein the first clamping flange and the second clamping flange face one another. The first arm is coupled to the second arm by a coupling member. The first arm and the second arm may also be called a jaw. In this embodiment, the coupling member comprises a biasing member having a spring force, wherein the spring force is effective inwardly relative to the first flange and second flange to bias the first and second flange towards one another and close the clamp and detachably attach the tank liner to the tank wall structure. In other words, the spring force or spring tension acts to keep the clamp closed so that the first and second flange are in contact with one another in the closed position of the clamp. The first and second arms can be considered to be hinged arms with spring tension provided by the biasing member to keep the clamp closed.

The biasing member may be a torsion spring. The torsion spring may have a helical form, whereby one distal end is coupled to the first arm and the other distal end is coupled to the second arm.

The first clamping flange is located at the distal end of the first arm. The first arm has an opposing proximal end which is coupled to the proximal end of the second arm. The proximal end of the second arm opposes the second clamping flange.

The first and second clamping flanges have a breadth and a height to form a clamping flange surface. The clamping flange surface may be substantially planar or may be shaped so as to conform with the surface contour of the tank wall structure to which it is to be fastened. The tank liner is typically sufficiently thin to conform to the underlying contour of the tank wall structure and inner surface of the fuel tank.

In order to clamp the tank liner to the tank wall structure, the liner is placed over the inner surface of the tank wall and over the tank wall structure. The clamp is opened by applying an opening force to the proximal ends of the first and second arms that oppose the first and second clamping flanges. This opening force acts in the opposing direction to the spring force of the biasing member and is sufficient to overcome, i.e. exceed, the spring force of the biasing member. As a result, the first and second clamping flange are moved away from one another, opening the clamp and forming a gap. The gap of the clamp is placed over the liner and tank wall structure and the opening force is removed from the proximal ends of the first and second arm, thus enabling the spring force of the biasing member to cause the first and second flange to move towards one another and clamp the tank liner to the tank wall structure by a pressing action.

In an embodiment, the first arm and the second arm of the clamp are arranged on opposing sides of the tank wall structure so as to clamp the liner to the opposing sides of the tank wall structure and install the clamp. The tank wall structure may protrude from the inner surface of the tank wall into the tank volume so as to provide two opposing surfaces. The tank wall structure may be a protrusion. The tank wall structure may be elongate and protrude from the inner surface of the tank wall and provide a rib.

The tank wall structure may be integral with the inner surface of the tank wall or may be a separate part that is attached, for example glued or welded, to the inner surface of the tank wall. The tank wall structure may comprise several parts that are joined to one another, e.g. welded or glued.

In an embodiment, the tank wall structure comprises a planar member that protrudes from the tank wall into the tank volume. This planar member comprises the opposing surfaces and comprises a distal end that extends between the opposing surfaces. The tank liner extends over the opposing surfaces and the distal end of the planar member and the clamp clamps the liner to the two opposing surfaces of the planar member.

The fuel tank may comprise a plurality of tank wall structures such as the planar member that are located at intervals around the inner surface of the tank wall. One or more clamps may be used for each tank wall structure or planar structure.

The planar structure may have the form of a plate or a rib. In an embodiment, the planar structure may be substantially straight. Alternatively, the planar structure may have a distal end that is bent over such that an upturned L-shape is formed. The planar structure may be formed of a single piece or two or more pieces that are attachedly fastened together, e.g. welded or glued.

In an embodiment, the planar member protrudes perpendicularly from the tank wall into the tank volume.

In an embodiment, the first arm and the second arm have an arc shape. This enables that, when in the installation position within the volume of the fuel tank, only the first and second clamping flange are in contact with the liner and the remainder of the first and second arms is spaced apart from the liner and the tank wall structure.

In an embodiment, the coupling member is located above the distal end of the planar member. The coupling member may also be spaced apart from the distal end such that only the first and second clamping flange are in contact with the liner.

In an embodiment, at least one of the first flange and the second flange comprises an elastic material. The elastic material may comprise a layer that is attached to the first flange and/or the second flange. The elastic material may be rubber, e.g. a rubber cushion. The elastic material may assist in avoiding damage to the tank liner by the first and second clamping flange. The elastic material may also be used to increase the friction to the tank liner so as to further secure the position of the clamp in the installed position.

The clamp may be formed of a rigid material such as plastic or metal. Plastic has the advantage of being light weight and is suitable for applications, such as aircraft, in which it is desired to reduce the weight.

In an embodiment, the first flange and/or the second clamping flange comprises one or more protrusions. These protrusions may be used to increase the clamping force applied to the liner and tank wall structure and may also be used to enhance the positional stability of the clamp in the clamped and installed position. The protrusions may be elongated and extend lengthwise, i.e. in a direction from the coupling member towards the distal end of the arm.

In an embodiment, the clamp further comprises additional securing means to secure the closed position of the clamp. This may assist in hindering the clamp from falling off the installed assembly of the tank liner and tank wall structure, e.g. during use of the fuel tank in a vehicle.

In an embodiment, the securing means comprises a pin. A pin may be useful for a clamp with hinged first and second arms. In another embodiment, the securing means may comprise an excentric washer.

In embodiments, in which the coupling member comprises a biasing member, the biasing member may comprise a pin and a helical spring, e.g. a torsion spring. The pin rotationally couples the proximal ends of the first arm and second arm about a longitudinal axis, i.e. the longitudinal axis of the pin, to provide a hinged arrangement. The first and second arm are attached to the helical spring that is located about the pin. In some embodiments, the pin may be integral with one of the first and second arms so as to provide a hinged arrangement between the proximal ends of the first and second arms. In some embodiments, the pin is a separate part that is located through openings in the proximal ends of the first and second arms so that the proximal ends of the first and second arms are attached in a hinged arrangement to the pin. The spring has a helical form and its opposing distal ends are coupled to the first arm and second arm, respectively

In an embodiment, the first and second arm each have an opening or recess located in the proximal end. An external force is directable into these openings or recesses so as apply an opening force to temporarily increase the gap between the first and second clamping flange and open the clamp. The external force may be applied manually using a tool, e.g. pliers or two screwdrivers. In an embodiment, the first and second arms each comprise a handle extending from the proximal end so that manual force can be applied to the handle to provide the opening force.

In some embodiments, the tank liner comprises clamping points at which the clamps are arranged to clamp the tank liner to the tank wall structure. The clamping points may be indicted by use of a discernable colour or texture, for example.

The invention also comprises a vehicle comprising the fuel tank of any one of the embodiments described herein. The vehicle may be an aircraft, such as a passenger aircraft. Alternatively, the vehicle may be a rail vehicle or a road vehicle or a watercraft or a spacecraft.

Embodiments of the invention are described in more detail with reference to the accompanying schematic drawings that are listed below
Fig. 1 includes Figs 1A, 1B and 1C, whereby Fig. 1A illustrates a schematic side view of an aircraft, Fig. 1B illustrates a cross-sectional view of the aircraft along line A-A shown in Fig. 1A and Fig. 1C illustrates a cross-sectional view of the rear centre tank of the aircraft.
Fig. 2 illustrates a view of fuel tank with a clamp fastening the tank liner to the tank wall.
Fig. 3, which includes Figs 3A to 3E, illustrates schematic views of clamps according to various embodiments for use in the fuel tank.
Fig. 4, which includes Figs 4A to 4C, illustrates schematic views of devices for removing the clamp depicted in Fig. 2.

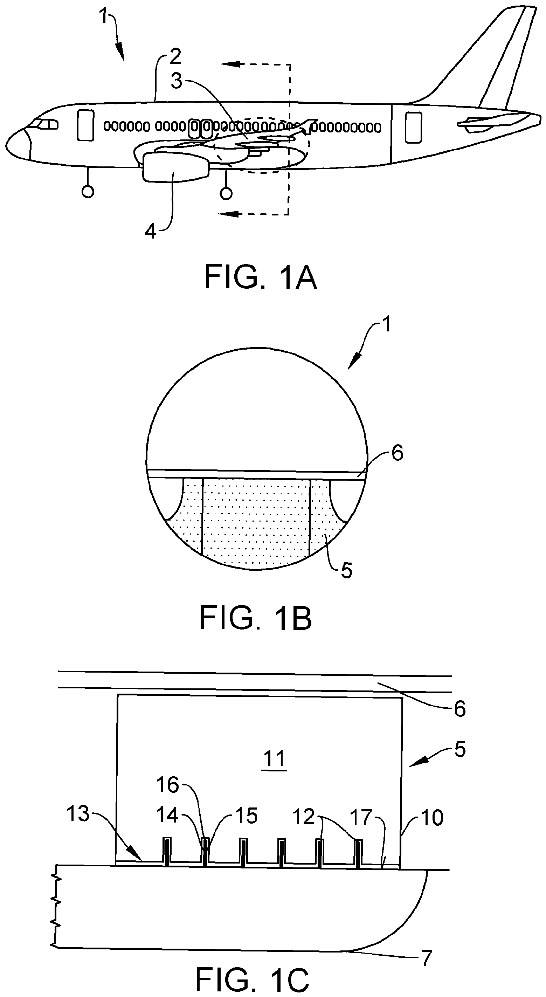

Fig. 1A illustrates a schematic side view of an aircraft 1 comprising a fuselage 2, two opposing wings 3 and under-wing mounted engines 4. The aircraft 1 also comprises at least one fuel tank 5 for storing liquid fuel, such as kerosene. Fig. 1B illustrates a cross-sectional view along the line A-A shown in Fig. 1A and Fig. 1C illustrates a cross-sectional view of the fuel tank 5. The fuselage 2 may comprise a plurality of ribs which extend fully or partially around the circumference of the fuselage 2 and stringers which extend in the longitudinal direction of the aircraft 1.

Fig. 1B illustrates the position of one of the fuel tanks 5 within the fuselage 2 of the aircraft 1. The fuel tank 5 is located under the floor grid 6 and between the grid 6 and the fuselage 2. The fuel tank is a rear center tank. In Fig. 1C, the belly fairing 7 that is located under the fuel tank 5 can also be seen.

Whilst the aircraft 1 shown in FIG. 1 is a commercial transport aircraft, the invention is applicable to a wide variety of vehicles and also to a wide variety of aircraft types. It is also applicable to aircraft with engines mounted other than under the wing, e.g. aft mounted engines. The invention is not limited for use in a rear center tank and can also be used for other types of fuel tank.

Referring to Fig. 1C, the fuel tank 5 comprises a tank wall 10 which encloses a tank volume 11. The tank wall 10 comprises at least one tank wall structure 12 which protrudes from the tank wall 10 into the tank volume 11. In this embodiment, the tank wall structure has the form of a protruding member 12 that extends from the inner surface 17 of the tank wall 10 into the tank volume 11. In this embodiment, a plurality of protruding members 12 are provided which are spaced apart at intervals along the tank wall 10. In this embodiment, the protruding member 12 has a substantially planar form and extends substantially perpendicularly to the tank wall 10. Each of the protruding members 12 comprises a first side 14 and a second side 15 which opposes the first side 14, and a distal end 16 which extends between the first and second sides 14, 15. In some embodiments, the distal end 16 may be bent so that the protruding member 12 comprises an upturned L-shape. The protruding member 12 may be integral with the inner surface 17 of the tank wall 10 or may be attached to the inner surface 17 of the tank wall 10, e.g. welded. The protruding member 12 may itself have two or more parts that are attached to one another.

The fuel tank 5 further comprises a tank liner 13 which extends over the tank wall 11 and the protruding members 12. The tank liner 13 has the form of a flexible foil. The tank liner 13 may comprise a material such as a cured sealant that is suitable for jet fuel and at least one reinforcement layer made of a textile or fibre material. The tank liner 13 serves to reduce fuel leakage from the tank 5.

The tank liner 13 extends over the inner surface 17 of the tank wall 10, up the first side 14, over the distal end 16, down the second side 15 of the protruding member 12 and over the adjoining portion of the inner surface 17 of the tank wall 11. In Fig. 1C, a plurality of protrusions 12 are illustrated and the liner 13 extends continuously and uninterruptedly over all these protruding portions 12 and the intervening sections of the inner surface 17 of the tank wall 10. The liner 13 may also extend over the entire inner surface 17 of the tank wall 10 and entirely enclose the tank volume 11. The liner 13 may comprise several separate sections that are joined together or overlap so as to entirely enclose the tank volume 11.

According to the invention, the liner 13 is attached to the protruding member 12 by one or more removable clamps 20.

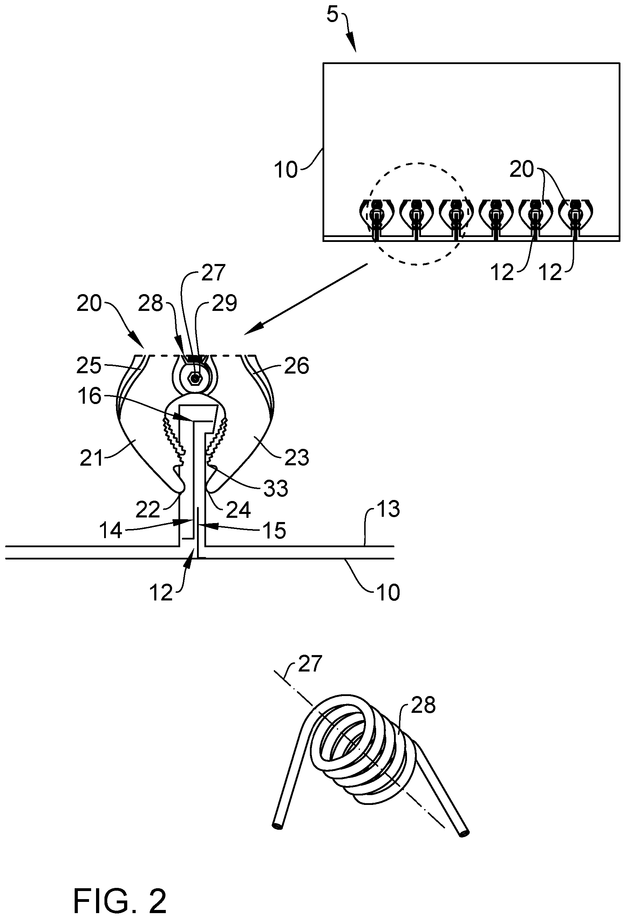

Fig. 2 illustrates a view of fuel tank 5, in which the tank liner 13 is fastened to the tank wall 10 by at least one clamp 20. A plurality of protruding members 12 is provided, each of which is connected to the tank liner 13 by a single clamp 20. Fig. 2 also illustrates an enlarged view of one clamp 20 in the installed position. The clamp 20 has a first arm 21 which has a distal end comprising a first clamping flange 22 for engaging the first side 14 of the planar member 12 and a second arm 23 having a distal end comprising a second clamping flange 24 for engaging the second side 15 of the planar member 12. The first arm 21 may be called a first jaw and the second arm 23 a second jaw.

The first arm 21 and the second arm 23 each have a breadth and an arc shape in plan view so that the clamp has a C-shape. The first clamping flange 22 and the second clamping flange 24 each have a breadth and a height and provide a clamping flange surface having an area. The clamping flange surface may be substantially planar.

The clamp 20 is removable and provides a fastening device which is used to hold or secure the liner 13 and tank wall structure 12 tightly together to prevent their movement or separation through the application of inward pressure, e.g. by a pressing action. The clamp 20 provides a temporary fastening as it is removable.

The clamp 20 is used to detachably attach the tank liner 13 to this tank wall structure 12 so as to line the inner surface 17 of the fuel tank 5 with the tank liner 13. The clamps 20 provide the only connection securing the liner 13 to the tank wall structure 12 and the tank wall 10. The clamp 20 or clamps remain in position within the tank volume 11 during use of the fuel tank 5, i.e. when the tank volume 11 comprises fuel, and come into contact with the fuel. This fuel is liquid fuel such as kerosene for aircraft or diesel for road or rail vehicles.

The first arm 21 has a first proximal end 25 which opposes the distal end of the first arm 21 which comprises the first clamping flange 22. The second arm 23 has a second proximal end 26 which opposes the distal end of the second arm 23 which comprises the second clamping flange 24. The proximal ends 25, 26 are coupled by a coupling member 29 around an axis 27 which extends parallel to the breadth of the arms 21, 23. The first and second arms 21, 23 may be coupled around a pin 29 which extends along the axis 27. The first and second arms 21, 23 of the clamp 10 have a hinged arrangement and are rotatable about the length of the axis 27 to move the first and second arms 21, 23 away from one another and open the clamp 20 and to move the first and second arms 21, 23 towards one another to close the clamp 20.

In the embodiment illustrated in Fig. 2, the coupling member 29 of the clamp 20 comprises a biasing member 28, which may have the form of a helical spring, e.g. a torsion spring. The first arm 21 and the second arm 23 are biased by this biasing member 28. The spring 28 has a helical form and is effective inwardly relative to the first flange 22 and the second flange 24 such that the spring 28 biases the first flange 22 and the second flange 24 towards one another to close the clamp 10. In other words, in the rest position, the first flange 22 faces towards the second flange 24 and may touch first flange 22. The first and second arms 21, 23 may be coupled around a pin 28 which extends along the axis 27 by the spring 28. The spring force or spring tension of the spring 28 acts to keep the clamp 20 closed so that the first and second clamping flanges 22, 24 are in contact with one another in the closed position of the clamp 20. The first and second arms 21, 23 can be considered to be hinged arms with spring tension to keep the clamp 20 closed. The spring force of the spring 28 may be selected so as to provide a suitable clamping force.

In order to fasten the tank liner 13 to the tank wall, the tank liner 13 is fastened to the tank wall structure 12 by the removable clamp 20. The clamp 20 is opened by applying force to the proximal ends 25, 26 of the first and second arms 21, 23 that oppose the first and second clamping flanges 22, 24. This opening force acts in the opposing direction to the spring force of the biasing member 28 and is sufficient to exceed this spring force of the biasing member 28. As a result, the first and second flange 22, 24 are moved away from one another to temporarily form a gap. This gap of the clamp 20 is placed over the liner 13 and tank wall structure 12 and the force is removed from the proximal ends 25, 26, thus enabling the spring force of the biasing member 28 to cause the first and second flange 22, 24 to move towards one another and clamp the tank liner 13 to the tank wall structure 12.

The clamp 20 is removable from the liner 13 and tank wall structure 12 so that the tank liner 13 can be removed from the fuel tank 5 by removing the clamp 20 or clamps. The fuel tank 5 is also easily fabricated due to the use of removable clamps 20 to attach the tank liner 13 to the protruding tank wall structure 12 and consequently to the inner surface 17 of the fuel tank 5 where it lines the tank volume 11. The clamps 20 detachedly attach the tank liner 13 to the tank wall 10.

The clamp 20 or clamps may be different forms. If more than one clamp 20 is used, the clamps 20 may all have the same form or have different forms, e.g. depending on the form of the tank wall structure 12 onto which the clamp 20 will fasten the liner 13.

The coupling member 29 is positioned above, and spaced apart from, the distal end 16 of the protruding member 12. The bent shape of the arms 21, 23 enables the arms 21, 23 to extend around and be spaced apart from the distal end 16 of the protruding member 12. This allows only the flange clamping surfaces of the clamping flanges 22, 24 to contact the opposing sides 14, 15 of the protruding member 12 and attach the liner 13 to the protruding ember 12.

The clamp 20 may be formed of a material, e.g. plastic, which has a density which is less than the density of the fuel. This is advantageous in that in the event that the clamp 20 becomes detached from the liner 13/protruding member 12, it would float to the surface of the fuel and not block the fuel outlet of the fuel tank 5.

In some embodiments, for example as depicts in Fig. 2, the surface of the first clamping flange 22 may comprise a plurality of ridges 33 which protrude partially into and better grip the liner 13 in order to attach the liner 13 to the protruding member 12. The second flange 24 may comprise a plurality of ridges 33 which protrude partially into and better grip the liner 13 in order to attach the liner 13 to the protruding member 12.

In some embodiments, the first clamping flange 22 and the second clamping flange 24 comprise an outer surface formed of an elastic material such as rubber. This elastic material may be used to increase the friction between the clamp 20 and the liner 13 and/or avoid damage to the liner 13.

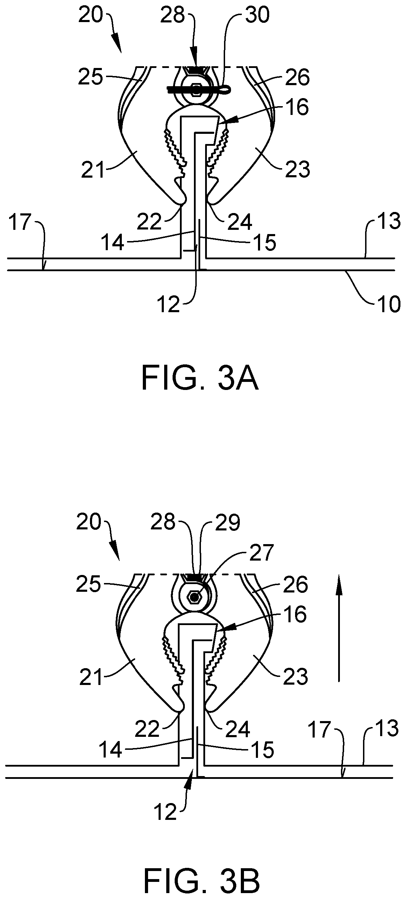

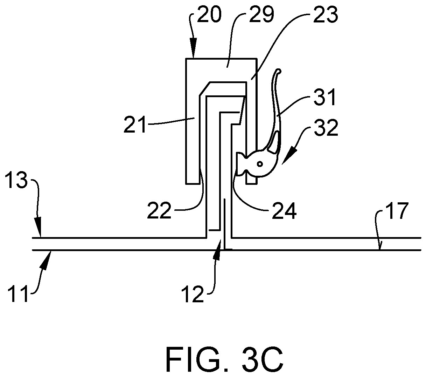

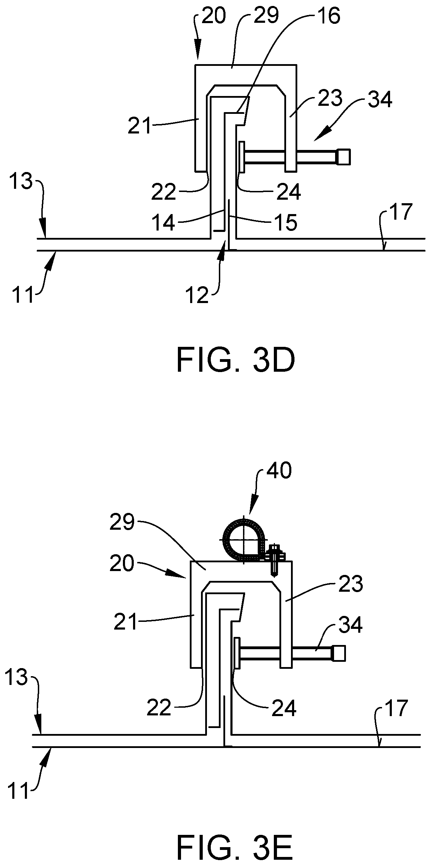

Fig. 3 illustrates schematic views of a clamp 10 according to various embodiments, which can be used for detachably fastening the tank liner 5 to the tank wall structure 12.

Fig. 3A illustrates a clamp 10 which further comprises a securing means 30 which extends between the first and second arms 21, 23 so as to further secure the position of the first and second arms 21, 23 in the installed and clamped position. In this embodiment, the securing means 30 is a pin. The pin 30 extends between the proximal end 25 of the first arm 21 and the proximal end 26 of the second arm 23 and extends perpendicularly to the longitudinal axis of the pin 29 of the biasing member 28 and parallel to the breadth of the first and second arms 21, 23 and also perpendicularly to the first and second sides 14, 15 of the protruding member 12. The securing means 30 may also extend through the pin 29 of the hinge coupling provided by the biasing member 28. In an alternative embodiment, the position of the clamp 10 is further secured by an additional securing member 30 which provides an additional force between the first arm 21 and the liner 13 and the second arm 23 and the liner 13. For example, the securing member 30 may be a screw which extends through one of the arms 21, 23 and into the protruding member 12.

Fig. 3B illustrates an embodiment in which the displacement of the clamp 10 from the protruding member 12 is hindered by the shape of the tank wall structure 12. In this embodiment, the tank wall structure 12 is a protruding member that has a bent distal end 16. This bent distal end 16 inhibits the movement of the clamp 10 by a sliding motion upwards in the direction of the arrow and off the protruding member 12

Fig. 3C illustrates a schematic view of an embodiment in which the clamp 10 further comprises an excentric washer 32 and a securing member 31 which extends through one of the arms 21, 23 only in order to further secure the position of the clamp 10 on the liner 13/protruding member 12 assembly.

Fig. 3D illustrates a schematic view of an embodiment in which the clamp 10 is a G-clamp, also known as a C-clamp, is used to secure the tank liner 13 to the protruding member12 of the tank wall 11. The end face of the screw of the G-Clamp provides the second clamping flange 24. The proximal ends 25, 26 of the two arms 21, 23 are coupled by the lateral portion of the C-clamp which is integral with both of the arms 21, 23. This lateral portion of the C-clamp provides the coupling member 29 which couples the first and second arm 21, 23 together.

In this embodiment, the clamping flanges 22, 24 are held on the assembly of the liner 13 and the protruding member 12 by way of the screw 34 of the G-clamp, which extends through one of the arms, in the depicted in embodiment, the second arm 23, and which is in contact with the second side 15 of the protruding member 12. The screw 34 also holds the first arm 21 against the opposing first side 14 of the protruding member 12 to clamp the liner 13 to both sides 14 15 of the protruding member 12. In contrast to the clamps 20 shown in Figs 2, 3A, 3B and 3C, in this embodiment, the two arms 21, 23 are not held in the closed position by a biasing member. The pressing force between the first and second clamping flanges 22, 24 which secures the liner 13 to the opposing sides 14, 15 of the protruding member 12 is provided by the screw 34 which is located on a single side of the clamp 20.

Fig. 3E illustrates an embodiment, in which a further clamp 40 is attached to the clamp 10. For example, the further clamp 40 may be attached to the upper portion of the clamp 10. This further clamp 40 may be used to secure the position of a further object, for example electric wires and/or wire bundles. Whilst in Fig. 3E the further clamp 40 is illustrated in combination with the C-clamp of Fig. 3D, a further clamp 40 may also be used in combination with the clamp 10 of any one of the embodiments described herein.

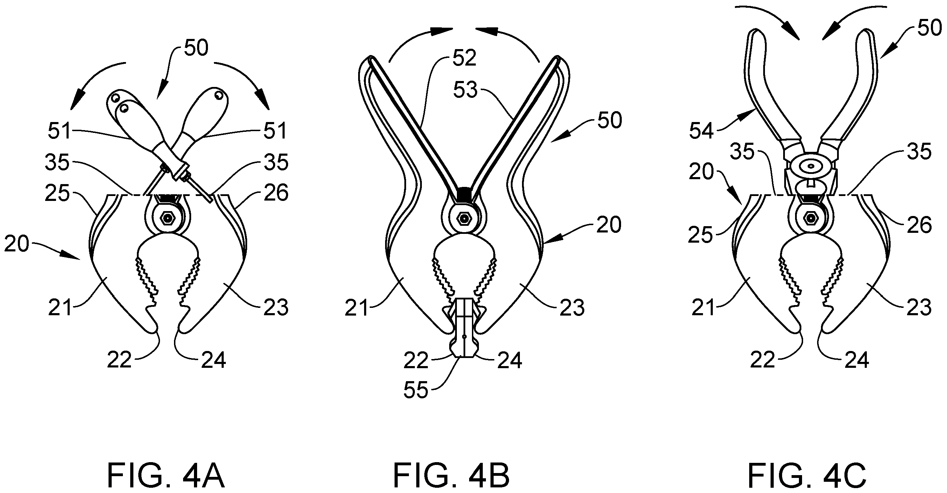

Fig. 4 depicts devices which may be used for removing the clamp 10 of Figs 2 and 3A to 3C. Fig. 4A illustrates an embodiment in which the proximal ends 25, 26 of the first and second arms 21, 23 each have an opening or recess 35. A further device 50 can be inserted into the openings 35 to apply a force in the opposing direction to the spring force of the biasing member 28. This opening force is greater than and overcomes the biasing spring force of the biasing member 28 force in order to move the first and second clamping flanges 22, 24 away from one another and to allow the clamp 20 to be removed from the assembly of the tank liner 13 and the protruding member 12. For example, two elongate members 51, e.g. rods or screw drivers, may be inserted in the openings 35 in a crossed and inclined manner and moved in outwards towards the tank liner 13 in the direction of the arrows.

Fig. 4B depicts an embodiment, in which the two arms 21, 23 each have a handle 52, 53 which extends from the proximal end 25, 26, respectively. In this embodiment, the handles 52, 53 can be moved towards one another as shown by the arrows to as to open the clamp 20 and move the first and second clamping flanges 22, 24 away from one another. In some embodiments, such as that depicted in Fig. 4B, the first and second clamping flange 22, 24 further comprise an outer surface formed of an elastic material such as rubber. The elastic material may be provided in the form of a layer that is attached to the first and second clamping flange 24.

Fig. 4C depicts an embodiment which is similar to that of Fig. 4A in which a pair of pliers 54 is used to remove the clamp 10. The handles of the pliers are moved outwards towards the tank liner 13 in the direction of the arrows. This creates an opening force that opposes and exceeds the biasing spring force of the biasing member 28 force in order to move the first and second clamping flanges 22, 24 away from one another and to allow the clamp 20 to be removed from the assembly of the tank liner 13 and the protruding member 12.

### List of reference signs:

- 1: aircraft
- 2: fuselage
- 3: wing
- 4: engine
- 5: fuel tank
- 6: floor grid
- 7: fairing
- 10: tank wall
- 11: tank volume
- 12: tank wall structure
- 13: tank liner
- 14: first side
- 15: second side
- 16: distal end
- 17: inner surface
- 20: clamp
- 21: first arm
- 22: first clamping flange
- 23: second arm
- 24: second clamping flange
- 25: first proximal end
- 26: second proximal end
- 27: axis
- 28: biasing member
- 29: pin
- 30: securing means
- 31: securing member
- 32: eccentric washer
- 33: ridge
- 34: screw
- 35: opening
- 40: further clamp
- 50: opening device
- 51: elongate member
- 52: handle
- 53: handle
- 54: pliers
- 55: elastic layer

## Claims

1. A fuel tank (5), comprising:
a tank wall (10) enclosing a tank volume (11), and
a tank liner (13),
wherein the tank wall (11) comprises a tank wall structure (12) located in the tank volume (11) and the tank liner (13) is detachably attached to the tank wall structure (12) by at least one removable clamp (20).

2. The fuel tank (5) according to claim 1, wherein the clamp (20) comprises:
a first arm (21) having a first clamping flange (22), and
a second arm (23) having a second clamping flange (24),
wherein the first arm (21) is coupled to the second arm (23) by a coupling member (29) and the first clamping flange (22) and the second clamping flange (24) face one another, and
wherein the first and second flange (22, 24) are closed onto the tank wall structure (11) by a screw connection (34) to detachably attach the tank liner (13) to the tank wall structure (12).

3. The fuel tank (5) according to claim 1, wherein the clamp (20) comprises:
a first arm (21) having a first clamping flange (22), and
a second arm (23) having a second clamping flange (24),
wherein the first arm (23) is coupled to the second arm (23) by a coupling member (29) and the first clamping flange (22) and the second clamping flange (24) face one another
wherein the coupling member (29) comprises a biasing member (28) having a spring force, wherein the spring force is effective inwardly relative to the first clamping flange (22) and the second clamping flange (24) to bias the first and second clamping flange (22, 24) towards one another and to close the clamp (20) and to detachably attach the tank liner (13) to the tank wall structure (12).

4. The fuel tank (5) according to claim 2 or claim 3, wherein the first arm (21) and the second arm (23) are arranged on opposing sides (14, 15) of the tank wall structure (12) and clamp the tank liner (13) to the opposing sides (14, 15) of the tank wall structure (12).

5. The fuel tank (5) according to any one of claims 2 to 4, wherein the tank wall structure (12) comprises a planar member that protrudes from the tank wall (10) into the tank volume (11) and that comprises the opposing surfaces (14, 15) and a distal end (16) that extends between the opposing surfaces (14, 15), wherein the tank liner (13) extends over the opposing surfaces (14, 15) and the distal end (16) of the planar member (12) and the clamp (20) clamps the tank liner (13) to the two opposing surfaces (14, 15) of the planar member (12).

6. The fuel tank (5) according to claim 5, wherein the planar member (12) protrudes perpendicularly from the tank wall (10) into the tank volume (11).

7. The fuel tank (5) according to any one of claims 2 to 6, wherein the first arm (21) and the second arm (23) have an arc shape.

8. The fuel tank (5) according to any one of claims 5 to 7, wherein the coupling member (28) is located above the distal end (16) of the planar member (12).

9. The fuel tank (5) according to any one of claims 1 to 8, wherein at least one of the first clamping flange (22) and the second clamping flange (24) comprises an elastic material (55).

10. The fuel tank (5) according to claim 9, wherein the elastic material (55) comprises a layer that is attached to the at least one of the first clamping flange (22) and the second clamping flange (24).

11. The fuel tank (5) according to any one of claims 3 to 10, further comprising securing means (30) to secure the closed position of the clamp (20).

12. The fuel tank (5) according to claim 11, wherein the securing means (30) comprises a pin (31) or an excentric washer (32).

13. The fuel tank (5) according to any one of claims 3 to 12, wherein the biasing member (28) comprises a pin (29) rotationally coupling the proximal ends (25, 26) of the first arm (21) and second arm (23) about a longitudinal axis (27) and the first and second arm (21, 23) are attached to a spring (28) that is located about the pin (29).

14. A vehicle (1) comprising the fuel tank (5) of any one of claims 1 to 13.

15. The vehicle (1) according to claim 14, wherein the vehicle (1) is an aircraft.
